# EUROPEAN PATENT APPLICATION

(11) **EP 2 389 815 A1**
(43) Date of publication of application: **30.11.2011**
(21) Application number: 11004436.9
(22) Date of filing: 31.05.2011
(51) Int. Cl.: A23C 9/00, A23G 1/00, A23G 1/32

(54) **Milk and chocolate crumb having enhanced caramel flavor**

(30) Priority: 31.05.2010 US 350017 P
(71) Applicant: Cargill Inc., Wayzata, MN 55391 (US)
(72) Inventor: Moran, Patrick, Little Canada, MN 55117 (US); Reed, Stacy, Lititz, PA 17543 (US)
(74) Representative: De Corte, Filip Alois Julia

(57) **Abstract**

The present disclosure provides crumb of the type used in making milk and white chocolates with enhanced flavor and/or aroma. It has been found that adding alpha-dicarbonyls, e.g., 2- or 3-carbon alpha-dicarbonyls such as pyruvic acid and pyrualdehyde, can add noticeable caramel and/or toffee notes to the flavor and/or the aroma of the crumb without a concomitant increase in less desirable flavors and aromas, such as burnt or earthy notes.

## Description

### TECHNICAL FIELD

The present disclosure relates generally to crumb of the type used in making milk chocolate and so-called "white chocolate". The disclosure has particular utility in enhancing the flavor and aroma of the crumb.

### BACKGROUND

Chocolate crumb, first developed in the 1870s by Daniel Peter, is a co-dried mixture of milk, sugar, and cocoa liquor. Historically, this process yielded a lumpy, aerated product that resembles bread crumbs. Chocolate crumb is traditionally mixed with cocoa butter (or, more recently, cocoa butter substitutes) then refined, conched, and tempered to form a milk chocolate. "White crumb" is formed in a similar manner, but without the cocoa liquor, or at least using cocoa butter instead of the liquor to avoid adding cocoa solids; this white crumb can be mixed with cocoa butter or substitutes then refined, conched, and tempered to form "white chocolate".

There are several advantages of forming crumb instead of adding milk, sugar, and, optionally, cocoa liquor as separate ingredients to form the final milk or white chocolate. For example, crumb can be stored longer than dried milk without rancidity. The crumb may comprise 80 weight percent (wt%) or more of the total ingredients in the final chocolate, making subsequent processing simple and quick.

Perhaps the primary benefit of crumb in the production of milk and white chocolates, however, is the rich, creamy flavor that crumb imparts. Common crumb manufacture involves heating the milk, sugar and cocoa liquor for an extended period of time, typically at temperatures in excess of 100°C, to evaporate water and dry the crumb. At these elevated temperatures, Maillard reactions between reducing sugar (typically lactose in the milk) and amino groups (from proteins in the milk and, if present, the cocoa solids) create a complex range of flavor volatiles. By carefully controlling the time, temperature, water content, and pH, among other parameters, chocolate manufacturers can tailor the flavor of the crumb and the final chocolate.

Creating a desired flavor profile for a crumb is something of an art and has not been widely studied in the literature. Heating crumb at a higher temperature or for a longer time can increase the caramel and toffee flavor notes often preferred by North American and European consumers. However, the Maillard reaction also creates other flavor volatiles, some of which can contribute less desirable burnt or bitter flavors. Prolonged heating can also promote lipid oxidation, which can add unattractive flavors and aromas.

Some have proposed specific techniques to enhance caramel flavors in chocolate crumb. For example, US Patent 5,591,474 (Miller) suggests adding caramelized sugar to crumb by heating a portion of the sugar and liquid milk at a temperature of 105-115°C long enough to caramelize the sugar. The balance of the sugar and milk are then added to this hot, caramelized batch. Miller contends that this process enhances caramel flavor, but it seems likely that this high-temperature processing would also lead to less desirable flavor volatiles, too. Caramelizing the sugar at higher temperatures or for longer times may add more caramel flavor to the crumb, but would also tend to produce more of the less desirable volatiles that would adversely impact the crumb flavor profile. The creation of these less desirable volatiles thus would limit the amount of caramel flavor that can be imparted to the final crumb.

Miller proposes another way of altering the flavor of chocolate crumb in US Patent 5,626,900. In this disclosure, Miller suggests replacing part of the sugar in the crumb recipe with molasses, which he characterizes as a "caramel-like flavoring ingredient". Molasses, however, has a number of other volatiles, e.g., sulfur compounds, that can detract from the flavor and aroma of the crumb. As in Miller's other proposed solution, the presence of less desirable volatiles can significantly limit the efficacy of this caramel flavor enhancement.

### BRIEF DESCRIPTION OF THE DRAWINGS

Figures 1 and 2 are aroma measurements and flavor measurements, respectively, for samples of crumb with and without added alpha-dicarbonyls.

Figures 3 and 4 are aroma measurements and flavor measurements, respectively, for samples of crumb with and without added methylglyoxal or L-ascorbic acid.

Figures 5 and 6 are aroma measurements and flavor measurements, respectively, for samples of crumb with whole milk powder or with enzyme-treated milk; the enzyme-treated milk samples were tested with and without added methylglyoxal or L-ascorbic acid.

Figure 7 is a chromatogram of two samples selected from those tested in connection with Figures 5 and 6.

### DETAILED DESCRIPTION

### Overview

Specific details of several embodiments of the disclosure are described below. The present disclosure contemplates methods for producing crumb, e.g., chocolate crumb; crumbs, which may be produced by such methods; and chocolate products made using such crumbs.

One aspect of the present disclosure is directed toward a method for producing crumb that includes combining milk solids, water, sugar, and an alpha-dicarbonyl component to form a wet combination. In one implementation, a weight of alpha-dicarbonyl from the alpha-dicarbonyl component is at least about 0.05% of the weight of the milk solids, both on a dry basis. This wet combination is heated to a temperature of about 60-100°C and is dried to a moisture content of no more than 3%.

An alternative embodiment of the invention provides another method for producing a chocolate crumb product that includes combining milk solids, water, sugar, and an alpha-dicarbonyl component to form a sweetened milk composition. A weight of alpha-dicarbonyl from the alpha-dicarbonyl component is at least about 0.05% of the weight of the milk solids, both on a dry basis. The sweetened milk composition and cocoa solids are heated under applied vacuum to produce a dry crumb having a moisture content of no more than 3%. If so desired, the sweetened milk composition may be heated to a temperature of less than 100°C for a period of time before addition of the cocoa solids.

A method for producing a crumb product in accordance with still another embodiment involves combining milk solids, water, sugar, and an alpha-dicarbonyl component to form a sweetened milk composition. The sweetened milk composition under applied vacuum to produce a dry crumb having a moisture content of no more than 3%. The dry crumb has a noticeable increase in caramel and/or toffee flavor and/or aroma, as determined by a trained sensory panel, in comparison to a control crumb that is formed in the same manner but without the alpha-dicarbonyl component.

### Selected Definitions

As used herein, the term "crumb" refers to a combination of milk solids and sugar that has been co-dried to a moisture content of no greater than 5%, preferably no greater than 3%, more preferably 2% or less. Crumb may also optionally include cocoa solids. If a crumb includes cocoa solids, it may be referred to herein as a "chocolate crumb"; if the crumb does not include cocoa solids, it may be referred to herein as "white crumb".

As used herein, the term "moisture content" refers to the percentage by weight of water based on the total weight of a combination. The terms "dry weight percentage", "weight percentage on a dry basis", and "dry wt%" are each used herein to refer to the percentage by weight of the specified component based on the total weight of a combination, but excluding the weight of the water. Hence, a combination containing 40 grams of component A, 60 grams of component B, and 50 grams of water has a moisture content of 33% and component A is 40 dry wt% of the composition. The term "ppm (dry)" as used herein refers to the parts by weight of the specified component for each 1 million parts by weight of the total combination, but excluding the weight of the water. Hence, a component that makes up 0.1 dry wt% of a composition is present in the composition at 1,000 ppm (dry).

Unless otherwise indicated, all numbers expressing quantities of ingredients, properties such as molecular weight, percentages, reaction conditions, and so forth used in the specification and claims are to be understood as being modified by the term "about." Accordingly, unless indicated to the contrary, the numerical parameters set forth are approximations that may depend upon the desired properties sought.

### Ingredients

Certain embodiments of the invention provide methods of making a crumb by combining milk solids, water, sugar, an alpha-dicarbonyl component, and, optionally, cocoa butter (or cocoa butter substitutes) and/or cocoa solids to form a wet combination, also referred to herein as a sweetened milk composition. The milk solids may comprise any of a range of milk solids known in the art. For example, the milk solids may comprise whole milk powder, low fat milk solids, non-fat dry milk (NFDM), or whey proteins. In some embodiments, the milk solids and some or all of the water content of the sweetened milk composition may be provided by using liquid milk, e.g., whole milk, skim milk, evaporated milk, or sweetened condensed milk. The milk solids may comprise about 15-65 dry wt%, e.g., 20-60 dry wt% or 25-50 dry wt%, of the sweetened milk composition. If low fat milk solids or NFDM is employed as the milk solids, it may be desirable to add a fat to the crumb. As noted below, this fat may comprise cocoa butter. In another embodiment, however, butterfat may be used to enhance the crumb without adding cocoa butter; this may be more advantageous for white crumb.

The sugar used in the wet combination may comprise any suitable sugar, though the sugar preferably comprises sucrose. If so desired, the sucrose may be substituted in whole or, more desirably, in part with other sugars, such as fructose, glucose, lactose, or corn syrup solids, to provide the necessary sugar content. It is also contemplated that a minor fraction of the sugar may be substituted with a reduced- or non-caloric sugar substitute, such as aspartame, sucralose, monatin, steviosides, or sugar replacers such as polyols, e.g., erythritol, maltitol, sorbitol, or polydextrose. The sugar may comprise about 10-75 dry wt%, e.g., 25-70 dry wt%, of the wet combination. In many commercial chocolate crumbs, the weight ratio of milk solids to sugar is in the range of about 1:3 to 2:1, e.g., 1:3 to 1:1.5. Such ratios are expected to work well in embodiments of the present invention, as well.

The alpha-dicarbonyl component may comprise one or more alpha-dicarbonyls having 2-6 carbons. In a particularly preferred embodiment, the alpha-dicarbonyl component comprises at least one 2- to 4-carbon alpha-dicarbonyl. Embodiments employing 2- and/or 3-carbon alpha-dicarbonyls have proven particularly effective in enhancing the flavor and/or aroma of crumb. Examples of suitable 3-carbon dicarbonyls include pyruvaldehyde (also known as methylglyoxal or 2-oxopropanal) and pyruvic acid. In one embodiment, the alpha-dicarbonyl component comprises a 2-carbon alpha-dicarbonyl, a 3-carbon alpha-dicarbonyl, or a combination of 2- and 3-carbon alpha-dicarbonyls.

The alpha-dicarbonyls from the alpha-dicarbonyl component may comprise at least 250 ppm (dry), e.g., at least 400 ppm (dry) or at least 600 ppm (dry), preferably 1,000 ppm (dry) or more, of the wet combination. In some embodiments expected to work well, the alpha-dicarbonyls may comprise 400-30,000 ppm (dry), e.g., 1,000-15,000 ppm (dry) of the wet combination.

The total dry weight of the wet composition will depend in part on how much cocoa butter and other components are added to make different types of crumb. Hence, another way of viewing the alpha-dicarbonyl content of the wet combination is in relation to the milk solids content. Viewed in that light, the weight of alpha-dicarbonyls from the alpha-dicarbonyl component is at least 0.05% of the weight of the milk solids, both on a dry basis. In select embodiments, the weight of the alpha-dicarbonyls is at least 0.1%, e.g., at least 0.2% or at least 0.5%, of the weight of the milk solids, with the weight percentage in some useful embodiments being at least 1%, e.g., 2% or more or even 3% or more.

In another embodiment, the level of alpha-dicarbonyls is selected to produce a noticeable increase in caramel and/or toffee flavor and/or aroma, as determined by a trained sensory panel such as that described in the examples, in comparison to a crumb formed in the same manner, but without the alpha-dicarbonyl component. In a preferred implementation, this increase in caramel and/or toffee flavor and/or aroma is achieved without an increase in burnt flavor or aroma in the crumb.

The alpha-dicarbonyl component may be added as a separate ingredient, for example by adding pyruvaldehyde, or by microbial or enzymatic treatment of milk solids to generate alpha-dicarbonyls. Suitable food-grade alpha-dicarbonyl-containing products are commercially available from a variety of manufacturers, e.g., as a 40% solution of pyruvaldehyde.

The alpha-dicarbonyl component employed in the wet combination may be generated by forming a premix containing an alpha-dicarbonyl-generating agent, which may include an enzyme or biological agent, and at least a portion of the milk solids. This premix may also include water, sugar, or any other ingredient deemed useful. The premix may be held under reaction conditions suitable to generate the desired amount of alpha-dicarbonyl, preferably 2- and 3-carbon dicarbonyls, for a sufficient time to generate the desired quantity of alpha-dicarbonyls for addition to the wet combination.

Enzymes suitable for use as an alpha-dicarbonyl-generating agent include lactase, such as VALIDASE yeast lactase, commercially available from Valley Research, Inc. of South Bend, Indiana, US. The enzyme may be combined with milk solids and held at a suitable reaction temperature long enough to generate the desired amount of alpha-dicarbonyl.

Pyruvic acid and pyruvaldehyde are naturally generated by some prokaryotes. For example, *Lactobacillus helveticus* and *Lactococcus lactis ssp. lactis bv. diacetylactis* are lactic acid-producing bacteria that can produce pyruvic acid, pyruvaldehyde, and diacetyl (also known as 2,3-butanedione). They are used in the production of cheese (see, e.g., US Patent Application Publication Nos. 2009/0291167 and 2009/0186123) and are believed to be suitable for use as alpha-dicarbonyl-generating biological agents in the premix noted above. Such a biological agent may be mixed with the milk solids, water, and other desired ingredients to form a culture and the culture may be incubated at a warm temperature suitable for production of alpha-dicarbonyls by the bacterium in the presence of the milk solids; suitable temperatures are well known to cheese producers and others employing such bacteria, e.g., to produce lactic acid.

As noted above, cocoa butter and cocoa solids are optional ingredients in the sweetened milk composition. In one embodiment, for example, a white crumb is formed by adding neither cocoa butter nor cocoa solids to the wet combination. Alternative embodiments, however, provide both white and chocolate crumbs that include cocoa butter. As noted below, the cocoa butter may be added in the sweetened milk composition at the outset or added to the combination during drying or after it is dried to form the final crumb. The cocoa butter may be obtained by extraction from cocoa liquor using known processes. In other embodiments, some or all of the cocoa butter may be substituted with a cocoa butter substitute (CBS), cocoa butter replacer (CBR), or cocoa butter extender (CBE). Such products are well known in the art and are commercially available from a variety of sources, e.g., as lauric- and non-lauric-CBSs from vegetable fats, e.g., fractionated palm kernel oil. In some countries, regulatory definitions preclude the use of CBS, CBR, and/or CBE in products sold as milk chocolate and/or white chocolate; it may be preferable to omit such additions in those countries. The following discussion generally refers to cocoa butter for ease of understanding; unless stated otherwise, any combination of cocoa butter, CBS, CBR, and CBE can be used instead of straight cocoa butter. Crumbs of the invention that do include cocoa butter may comprise about 0.1-15 dry wt%, e.g., 2-13 dry wt%, cocoa butter (including any CBS, CBR, and/or CBE).

Chocolate crumb in accordance with embodiments of the invention include cocoa solids, either with or without cocoa butter. Cocoa solids may be added as cocoa liquor (also referred to as cocoa mass), which includes both the cocoa solids and cocoa butter, or as cocoa powder, which is formed by removing most of the cocoa butter from cocoa liquor. As is known in the art, cocoa liquor may be produced by shelling, breaking, and winnowing cocoa beans and roasting the beans and nibs. Chocolate crumbs in accordance with some embodiments of the invention include 2-20 dry wt%, e.g., 4-18 dry wt% or 10-18 dry wt%, cocoa solids.

Crumb in accordance with aspects of the invention may include any desired additional ingredients. In one implementation, the crumb includes additional flavoring agents. For example, a fruit crumb may be formed by including a selected fruit flavor in a white crumb. These flavoring agents could be added in the wet combination of milk solids, water, sugar, and alpha-dicarbonyl, or may instead be added to the combination during drying or after it is dried. A wide range of such favoring agents are commercially available. Again, regulatory definitions may limit or preclude the addition of such flavoring agents in products sold as milk chocolate or white chocolate.

As another optional ingredient, one could include an added fiber component in the crumb. Any food-grade dietary fiber may be used, including inulin, carrageenan, pectin, beta-glucan, or gum arabic.

One might also add protein hydrolysates, e.g., milk or vegetable protein hydrolysates, to the crumb composition for functional purposes. High levels of protein hydrolysates, however, may lead to more cocoa flavor notes rather than the caramel and/or toffee notes associated with other aspects of the present invention. Hence, some embodiments of the invention include no added protein hydrolysates in the wet combination.

Chocolate makers can combine the ingredients of the crumb in any proportion to achieve a desired taste. By way of example, one exemplary crumb formulation in accordance with an embodiment of this disclosure includes the following ingredients, all stated as weight percentage (wt%) of the total composition:
- Milk solids 32 wt% (9 wt% milk fat + 23 wt% milk solids non-fat)
- Sugar (sucrose) 52.5 wt%
- Cocoa liquor 13.5 wt% (approx. 54% of which is cocoa butter and 46% of which is cocoa solids)
- Water 1 wt%

### Method of Producing Crumb

Certain embodiments of the invention provide methods of making a crumb by combining the milk solids, water, sugar, and alpha-dicarbonyl component, optionally including cocoa butter and/or cocoa solids, and drying the wet combination. The amount of water in the combination may be varied as desired to achieve the desired properties. Typically, the moisture content of the wet combination will be at least 5%, preferably 10% or more, and can be appreciably higher, e.g., if liquid milk is used instead of milk powder or NFDM. Given, however, that the final crumb desirably has no greater than 5%, and preferably less than 2%, moisture content, limiting the moisture content of the wet combination to no more than 40%, e.g., 30% or less, can reduce energy consumption and increase throughput. If the milk solids, sugar, and alpha-dicarbonyl component do not together have at least 5% moisture content, additional water may be added. For example, if NFDM or whole milk powder is used as the milk solids, it may be useful to add water to bring the moisture level of the wet combination to 10-30%.

The wet combination can be combined by mixing in a batch or a continuous mixing operation. A range of mixers suitable for crumb production are known in the art. They include both low- and high-shear mixers, with low-shear mixers typically operating at less than 200 rpm and high-shear mixers typically operating at 1,000 rpm or more.

As noted below, the wet combination is desirably dried under controlled temperature and pressure conditions. In one embodiment, the products are mixed in a mixer then transferred to a separate dryer. For example, the wet combination may be mixed in a mixer then transferred to a vacuum band dryer or a vacuum roll dryer. In other embodiments, the dryer may be adapted to actively mix the ingredients during drying; examples scraped surface heat exchangers and mixer/dryers available from LIST AG of Arisdorf, Switzerland that employ a stirred mixer vacuum process.

It may be desirable to conduct the drying in a two-stage operation if the initial moisture content of the wet combination is relatively high, e.g., greater than 15%. For example, where the milk solids are provided in liquid milk with a high moisture content, there may be a lot of water present in the wet combination. This initial wet combination may be treated in a first dryer under a first set of processing conditions to reduce the moisture content to 15% or less, e.g., 12% or less, desirably no more than 10%, then moved to another dryer under a second set of processing conditions to reduce the moisture content to 5% or less, e.g., no more than 3% or no more than 2%, desirably 1% or less. This two-stage process may be advantageous when using a vacuum band dryer or a vacuum roll dryer. Alternatively, a single dryer may be employed, with the process conditions changing (if needed) as the moisture content drops; this may be appropriate for stirred mixer vacuum processes or scraped surface heat exchangers.

The ingredients may be charged to the mixer at room temperature, if so desired, and heated to a suitable temperature in the dryer. The temperature of the material being treated is desirably kept below 100°C, e.g., no greater than 95°C or no greater than 90°C. In select embodiments, the temperature is no greater than 90°C, e.g., 85°C or less, at moisture levels below 15%, e.g., 10% or less. Lower processing temperatures can require too long to dry the wet combination to a desirable moisture content. Accordingly, the temperature is desirable greater than room temperature, e.g., at least 50°C. Temperatures of 50-95° C, e.g., 60-90° C, are expected to suffice, with a temperature of 65-85°C being expected to work well for a range of products.

It is to be noted that these temperatures refer to the temperature of the mass being processed. As evaporative cooling will reduce the temperature of that mass, the dryer's heater may be set to deliver heat at a higher temperature than the target temperature of the mass. In one system that has been found to work well on at least a laboratory scale (described in the examples below), a vacuum oven set to a temperature of 100°C was found to yield suitable results; it is believed that the temperature of the mass in the oven (as opposed to the gas above the mass) generally stayed below 90°.

The temperature ranges noted here have been found to yield high-quality crumbs in accordance with this disclosure with desirable flavor profiles. These crumbs may have enhanced caramel and/or toffee notes with surprisingly little of the unpleasant notes that can be generated in some higher temperature processes, such as those noted in Miller's US Patent 5,591,474, discuss above.

The dryer may be operated at reduced pressure, which will improve drying rates at the temperatures contemplated. In one operation, the dryer has a vacuum pump that applies a reduced pressure to the head space in the dryer. This vacuum pump may apply a vacuum of greater than 400 torr (~15 inches of Hg), e.g., at least 600 torr (~23.6 inches of Hg) or 700 torr (~27.6 inches of Hg). Such reduced-pressure drying, which may be referred to herein as "vacuum drying", is particularly useful in some implementations because it can achieve suitable drying rates while maintaining the temperature of the mass being dried below 100° C, e.g., 95° C or less, as noted above.

Processing times in the dryer(s) will vary depending on the moisture content in the initial wet combination and the selected dryer operating parameters. In certain embodiments, the dryer may be set to a temperature of 95-100°C and a vacuum of 600-650 torr, and the wet combination may be treated in the dryer for upwards of 30 minutes, e.g., 45-240 minutes. (Again, the temperature of the mass being dried under such vacuum drying conditions may be noticeably lower than the target temperature of the dryer.)

All of the ingredients of the wet combination may be added at the same time or they may be added serially over a period of time. In one embodiment, the alpha-dicarbonyl component and at least a portion of the milk solids, sugar, and water are added at the outset. Extending the time that the alpha-dicarbonyls are in contact with the milk solids and sugar is believed to enhance the flavor of the crumb product.

One embodiment of the invention is a crumb that includes cocoa butter. In one implementation, all of the milk solids, water, sugar, and alpha-dicarbonyl component are mixed and heated in a reduced-pressure atmosphere (e.g., 95-105°C headspace temperature while drawing a vacuum of 600-650 torr) for at least 15 minutes, e.g., 15-30 minutes. After this first treatment phase, the cocoa butter is added and mixed with the rest of the mass and dried in a reduced-pressure atmosphere (which may be maintained at the same conditions as in the first phase) until the desired moisture content is reached.

Testing has demonstrated that crumb produced in accordance with embodiments of the invention have an appealing flavor profile, enhancing flavor and aroma attributes desired in crumb, such as caramel and toffee notes, without a concomitant increase in less desirable flavor and aroma attributes that can come from other processes, such as those proposed by Miller and discussed above.

In particular, taste and aroma testing by trained test panels have demonstrated that crumb products with an alpha-dicarbonyl component in accordance with aspects of the invention reliably yield a crumb with a more intense flavor, aroma, or flavor and aroma, typically with more pronounced caramel flavor and/or aroma. Surprisingly, this sensory analysis did not note any significant increase in earthy, nutty flavors of the type commonly associated with some pyrazines. Analytical testing of crumb in accordance with an embodiment of the invention demonstrated a dramatic increase in the content of 2,5-Dimethyl-4-hydroxy-3(2H)furanone (also known as FURANEOL), a compound associated with caramel flavor in chocolate crumb.

### EXAMPLES

Aspects of certain methods in accordance with aspects of the invention are illustrated in the attached examples, identified as Example 1 and Example 2.

### Example 1

A chocolate crumb product was prepared using pyruvic acid as the alpha-dicarbonyl component. Sweetened condensed milk (SCM) was mixed with pyruvic acid at 500 parts pyruvic acid/million parts SCM. The SCM contained about 36 dry wt% milk solids, about 64 dry wt% sucrose, and a moisture content of about 28%, so the pyruvic acid was about 700 ppm (dry) of the wet combination and the weight of the pyruvic acid is about 0.19% of the weight of the milk solids, both on a dry basis.

This wet combination was allowed to react for 150 minutes in an oven set to 100°C followed by evaporation to approximately 95% solids (oven set to 100°C under 25 inHg vacuum for approximately 12 minutes). Molten cocoa liquor was thoroughly mixed into to the evaporated product at 11.35 dry wt% of the combined composition. The combined composition was placed back into the vacuum oven and dried for three hours (oven set to 100°C, 25-28 inHg vacuum). A control chocolate crumb product was prepared under identical conditions but with no added pyruvic acid. Both crumb products were ground to pass through a #10 testing sieve.

A panel of five experienced tasters and food developers evaluated the ground crumb samples using internally developed attributes (Table 1) on a scale from 0 (no aroma/flavor) to 10 (most imaginable aroma/flavor). Scaling was individual, but reported data was derived by consensus. The ground crumb samples (10g) were presented in 2 ounce soufflé cups with lids. Aroma was evaluated by opening the cup and quickly smelling the equilibrated headspace. Flavor was evaluated by taking a small taste (by spoon) with a water rinse between samples.

**Table 1**

| Aroma attribute definitions: |
|---|
| Overall Intensity: overall intensity of the aroma over all aroma attributes |
| Toasted: cooked notes, like from baking, sugar confection manufacturing |
| Caramel/Toffee: like the named confections |
| Hot Cocoa Mix: resembles products such as SWISS MISS hot cocoa |
| Dairy powder/Casein: like stale NFDM |
| Dairy fat: like lipolyzed milk fat, cheesy, butyric, baby vomit, provolone cheese |
| milk chocolate: resembles the aroma of a milk chocolate bar |
| |

| Flavor attribute definitions: |
|---|
| Overall Intensity: overall intensity of the flavor over all flavor attributes |
| Cocoa Powder (non-alkalized): resembles a natural cocoa powder, red color |
| Malted: resembles malted milk, OVALTINE, WHOPPERS candy |
| Caramel/Toffee: burnt sugar notes, resembles HEATH bar and SEE'S candy |
| Buttery: resembles fresh butter, with acetoin, diacetyl, lactone, and fatty notes |
| Milk Chocolate: resembles the flavor of a milk chocolate bar |

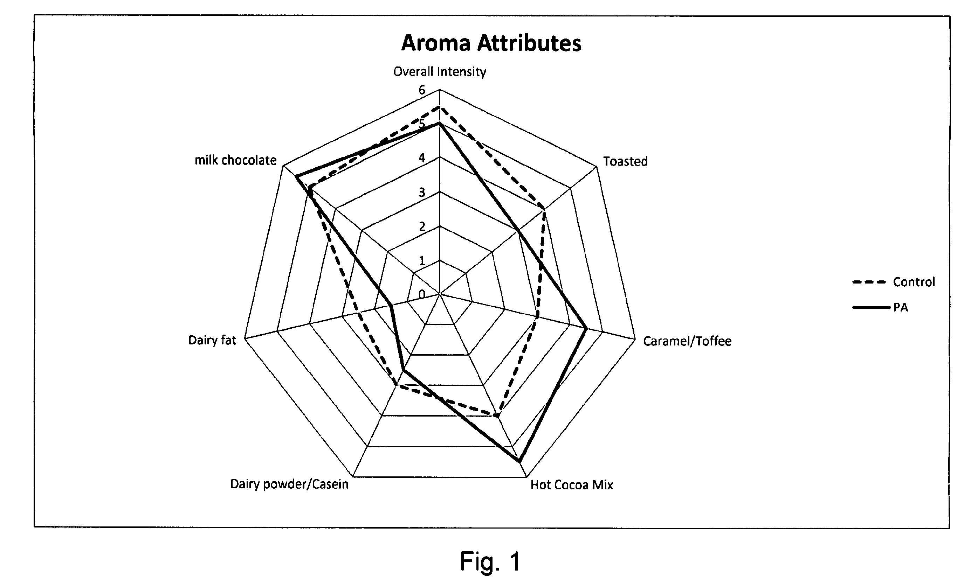

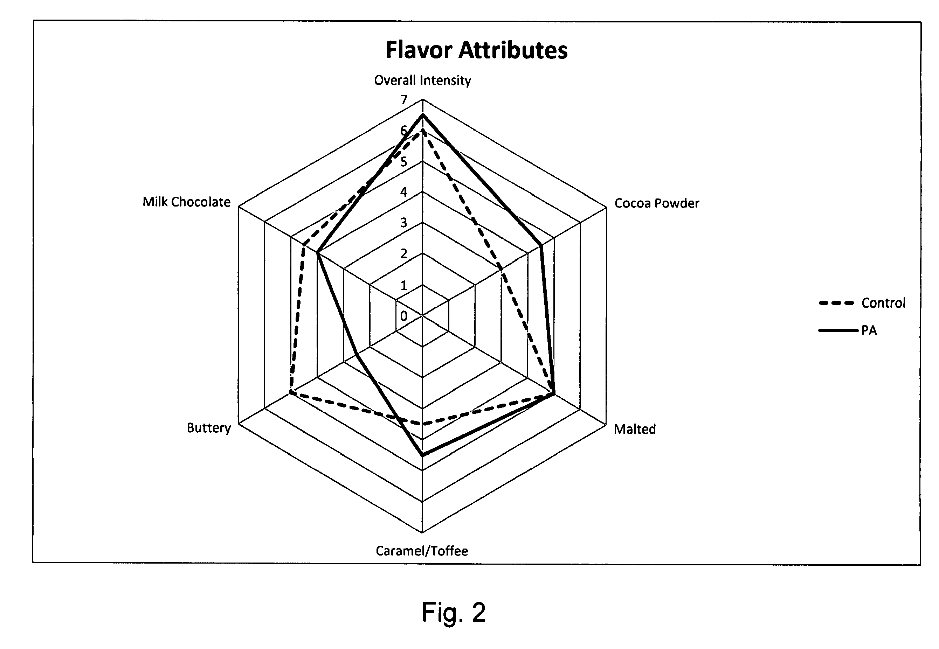

Figure 1 illustrates the aroma measurements and Figure 2 illustrates the flavor measurements; in these figures, "PA" refers to the samples with added alpha-dicarbonyls. The overall aroma intensity of the crumb with added alpha-dicarbonyl was not very different from that of the control crumb, but the perception of hot cocoa mix and caramel/toffee was greater and the toasted and dairy fat measurements were less than control. The change in overall flavor intensity due to the inclusion of the alpha-dicarbonyl component was also minor, however cocoa powder and caramel/toffee flavor attributes were enhanced while the buttery flavor was subdued.

### Example 2

Two spray-dried samples were prepared by first reconstituting whole milk powder (WMP, 28.5% fat, lot#: 1863-200; Parmalat Canada, Inc.; Etobicoke, Ontario, Canada) in water to 17 wt% solids (24.95 kg water with 4.99 kg WMP) to form a reconstituted whole milk. One sample (sample A) was prepared by adding methylglyoxal (40 wt% in water; Aldrich, Milwaukee, WI, USA, product #: W296902) to the reconstituted whole milk such that the methylglyoxal was 1175 ppm (dry) (0.1175 dry wt%) of the combined product. The other sample (sample B) was prepared with the same concentration of L-ascorbic acid (USP-FCC/Ph.Eur.; DSM Nutritional Products, Kaiseraugst, Switzerland) instead of methylglyoxal. These two reconstituted milk products were heated under constant agitation in a steam-injected water bath to 72.8°C and held for 15 seconds; the solutions were cooled to approximately 35°C immediately prior to spray drying. Spray drying was done with a Niro Utility Dryer (~270 mL/min WMP solution fed into 24.5 cm diameter rotary vane atomizer at 22,400 rpm; mass air flow 360kg/h; drying chamber of 1.2 m diameter; 0.75 m cylindrical height; cone angle of 60°; cyclone collector 0.3 m diameter; powder collection container of 20 L; inlet air temp of 200°C and exit air temperature of 100°C).

Three chocolate crumb products were created, one using the untreated WMP and one using each of the spray-dried samples. For purposes of comparison to processes using sweetened condensed milk, a reconstituted sweetened condensed milk, or "scratch SCM", was prepared for each WMP variant. The 'scratch SCM' was made by adding the WMP (about 26 wt%) to reverse osmosis water (about 28 wt%) and blended in a Hobart mixer with standard paddle attachment at low speed. Once the WMP was dissolved, sugar (about 46 wt%) was slowly added and blended until the mixture was continuous.

To make chocolate crumb products, the "scratch SCM" samples were evaporated to approximately 95% solids in a vacuum oven setup (Shel Lab vacuum oven #1445, Cornelius, OR, USA; HyVac Dry Ice Foreline traps #33000-002, Royersford, PA, USA; Welch vacuum pump #2581B-50, Niles, IL, USA) in which the oven was set to 100°C at ≥ 25 inHg vacuum for approximately 28 minutes. Molten cocoa liquor (V502, Cargill Cocoa and Chocolate, Mt. Joy, PA, USA) (~60°C) was thoroughly mixed into the evaporated "scratch SCM" such that the concentration of the liquor was 11.35% (w/w) total dry solids. The SCM/liquor mixture was placed back into the vacuum oven and dried for three hours (oven set point 100°C, 25-28 inHg vacuum). The dried crumb products were ground to pass through a #10 testing sieve.

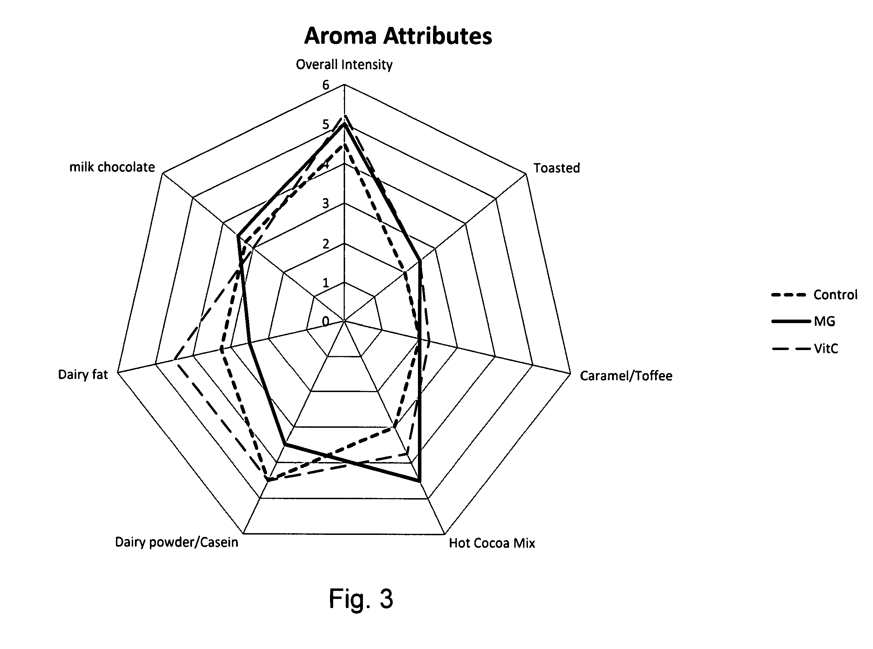

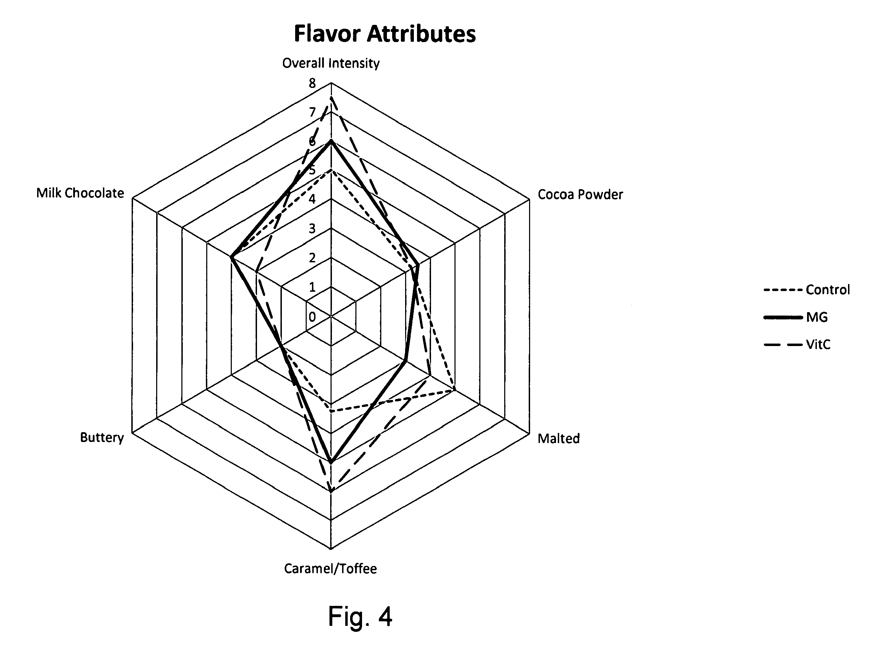

Sensory analysis was conducted in the same manner set forth in Example 1. Figure 3 shows the results of the aroma analysis and Figure 4 shows the results of the flavor analysis. Both of the crumbs containing spray-dried sample A with methylglyoxal (MG in Figures 3 and 4) and the crumb containing spray-dried sample B with L-ascorbic acid (VitC in Figures 3 and 4) had a more intense overall flavor and stronger caramel/toffee notes than did crumb made with the untreated WMP (Control in Figures 3 and 4).

### Example 3

A third test was performed using an alpha-dicarbonyl component that was generated by an enzymatic alpha-dicarbonyl-generating agent. Three samples were prepared using an enzyme treatment to hydrolyze the lactose contained in the WMP solution immediately before flavor reactant addition. Using the reconstituted whole milk of example 2 (30 kg, 17 wt% WMP) as a starting point, 40 mL of Validase Yeast Lactase (Valley Research, South Bend, IN, Lot#: CQ9141J) was thoroughly blended and allowed to act for 17.5 hours in refrigerator conditions (~4°C).

Much the same process was used as set forth in Example 2, but using the enzyme-treated reconstituted whole milk instead of the untreated reconstituted whole milk used in Example 2. In addition to spray-drying the samples containing methylglyoxal and L-ascorbic acid, a third spray-dried sample was prepared using the enzyme-treated milk without any additions. Chocolate crumbs were produced using each of these spray-dried samples and subjected to sensory testing in the same manner outlined in Example 2.

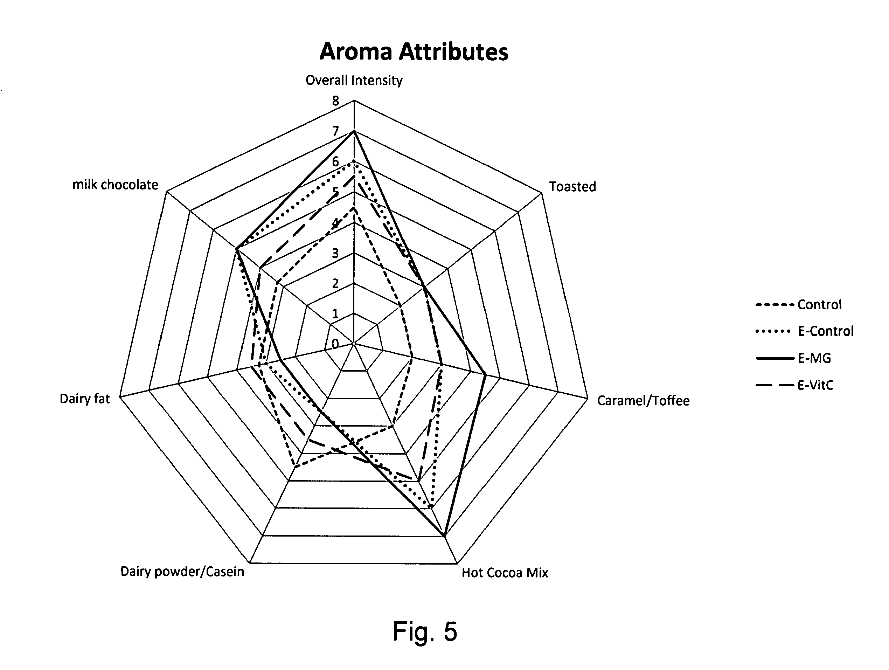

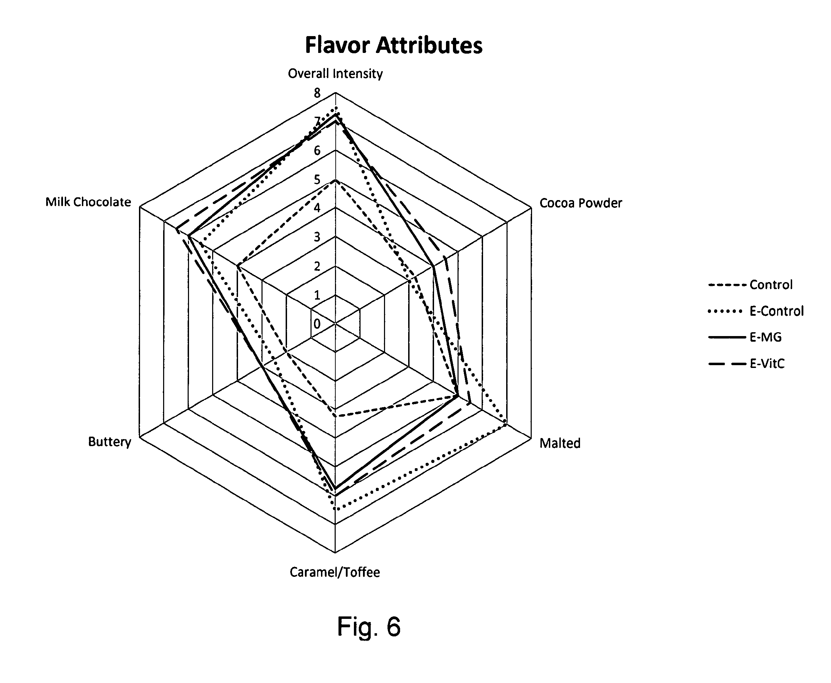

The results are shown in Figures 5 and 6, in which the Control was produced using WMP; the E-control was produced using the spray-dried enzyme-treated milk without any additions; the E-MG was produced using the spray-dried enzyme-treated milk with added methylglyoxal; and the E-VitC was produced using the spray-dried enzyme-treated milk with added L-ascorbic acid. Each of the crumbs containing enzyme-treated milk had more intense flavor and aroma, including stronger caramel/toffee notes, than did than the Control.

The E-control and E-MG crumb samples were also analyzed by GC/MS. The crumb samples were extracted with polydimethylsiloxane-coated Twister® stir bars (Gerstel Inc., Linthicum, MD, USA) where approximately 5 g of crumb sample was added to a round flat bottom flask, followed by 40 mL of ultrapure water and 10 L of 100 ppm deutrated ethyl benzene (Aldrich #: 586358, St. Louis, MO, USA) in diethyl ether (Aldrich #: 309958) as the internal standard (IS). A large, standard stir bar is then added to the flask with 4 Twisters® and the flask is capped and stirred in a water bath at 40□C for 1.5 hours. After the extraction time, the Twisters® were removed from the crumb solution and patted dry, thermally desorbed (MPS2, TDU, CIS: Gerstel Inc.), and analyzed by GC/MS (GC: Agilent Technologies 7890A, Santa Clara, CA, USA; MS: Leco Co. TruTOF HT, St. Joseph, MI, USA). Method specifics are outlined in Table 2.

**Table 2**

| **Thermal Desorption Unit (TDU) Conditions** | | **Gas Chromatographic Conditions** | |
|---|---|---|---|
| Method Name | Crumb.mth | Method Name | Crumb |
| Inlet Liner | Baffled Glass Liner | Column | DB5-MS (30m x .250 mm x 0.25 µm) |
| **Global Parameters** | | Carrier Gas | He |
| Runtime | 35 min | Inlet Mode | Solvent Venting |
| Cool Down Time | 5 min | Flow Mode | Constant |
| Cryo Timeout | 60 min | Flow Rate | 1.76 mL/min |
| **CIS Parameters** | | Septum Purge | 3 mL/min |
| Initial Temp | -120C | Inlet Purge Time | 30 sec |
| Equilib. Temp | 0.5 min | Flow | 20 mL/min |
| Initial Time | 0.5 min | Solvent Vent Time | 30 sec |
| Rate 1 | 10 C/s | Solvent Vent Flow | 100 mL/min |
| End Temp | 240 | Temperature Program | |
| Hold Time | 3 min | Initial Temp | 40C |
| **TDU Parameters** | | Initial Hold | 2 min |
| Initial Temp | 30C | Rate 1 | 5 C/min |
| Delay Time | 1 min | End Temp 1 | 125C |
| Initial Rate | 1 min | Rate 2 | 10 C/min |
| Rate 1 | 5 C/s | End temp 2 | 250C |
| End Temp 1 | 120C | Final Hold | 3 min |
| Hold Time 1 | 1 min | | |
| Rate 2 | 50 C/s | | |
| End Temp 2 | 300C | | |
| Hold Time 2 | 10 min | | |
| Transfer Temp | 250C | | |
| Vent Time | 1 min | | |
| Desorption Mode | Solvent | | |
| | Venting | | |

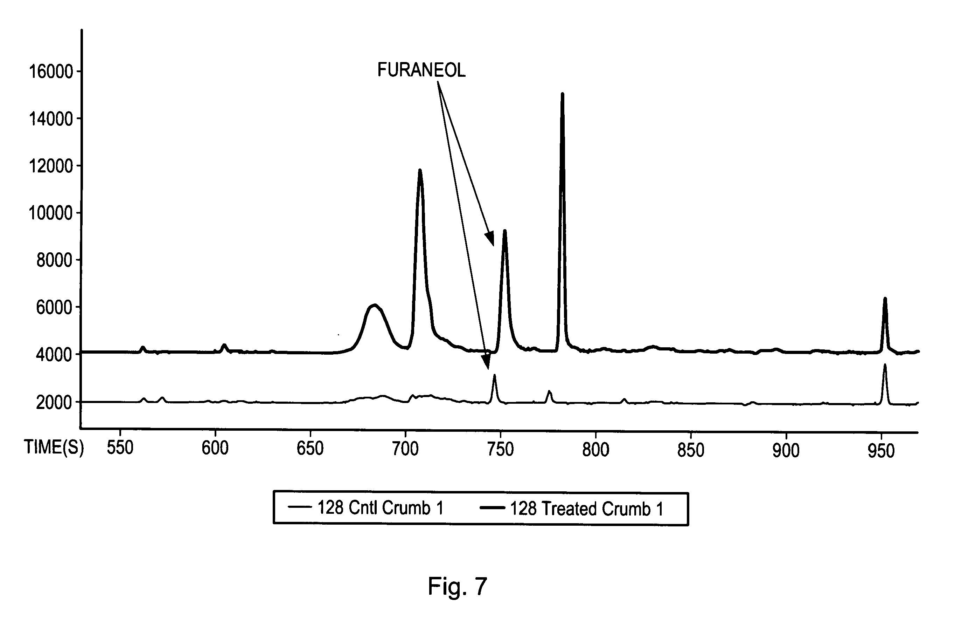

Figure 7 is a chromatogram showing the results of this test, in which the Furaneol content is noted. The lower curve is from the E-control sample; the upper curve is from the methylglyoxal-treated E-MG samples. The chromatograms are displayed in single ion mode (SIM) using the m/z=128 ion for clarity. One compound associated with caramel flavor in chocolate crumb is Furaneol. A comparison of internal standard peak ratios indicates that enzyme and methylglyoxal treated crumb has ten times more Furaneol than the enzyme treated control.

### Example 4 - Comparative Example

### US Patent 5,591,474

As noted above, Miller's US Patent 5,591,474 ("Miller 474") suggests caramelizing a portion of the sugar and liquid milk by heating at a temperature of 105-115° C, then adding the balance of the sugar and milk to the hot, caramelized batch. To see if Miller's caramelization process added any meaningful amount of alpha-dicarbonyls, two samples were prepared, each having 85.3g of sugar and 426.7 g of fluid whole milk.

Sample 474A was prepared by simply mixing the milk and sugar together without heating. Sample 474B was prepared in a process that paralleled that suggested in Miller 474. In particular, "20 units" (32.8 g) of the sugar was mixed with half as much (16.4 g) of the milk, which was sufficient milk to hydrate the sugar, and heated to and held at 110° C to substantially drive off moisture. Thereafter, the remaining sugar and the remaining milk were mixed with the heated components.

Volumes of Sample 474A, Sample 474B, and volume of the fluid whole milk used in both samples were subjected to gas chromatography in a manner analogous to that set forth above in Example 3. The content of glyoxal (a 2-carbon dicarbonyl), methylglyoxal (a 3-carbon dicarbonyl), and diacetyl (a 4-carbon dicarbonyl) of each sample was estimated from the chromatograph. Each of the samples had estimates for all three dicarbonyls of less than 2.5 ppm, which was below the lower limit of the calibration curve for the GC. (The glyoxal and methylglyoxal estimates were within 0.05 ppm for all three samples. Sample 474B had a slightly higher diacetyl estimate, but the difference is not deemed substantial given that all three samples were below the calibration limit of the GC.) This demonstrates that the caramelization process proposed in Miller 474 does not provide a useful source of these alpha-dicarbonyls.

### US Patent 5, 626, 900

Miller's US Patent 5,626,900 ("Miller 900") suggests replacing part of the sugar in the crumb recipe with molasses, which he characterizes as a "caramel-like flavoring ingredient". Five samples of a sugar component and milk were prepared, with each having 85.3g of sugar and 426.7 g of fluid whole milk, but the nature of the sugar used differed between the samples:

| Sample | Sugar Component |
|---|---|
| 900A | CRYSTAL SUGAR brand light brown sugar |
| 900B | CRYSTAL SUGAR brand dark brown sugar |
| 900C | 93.5 wt% white sugar plus 6.5 wt% BRER RABBIT brand Mild Flavor Molasses |
| 900D | 93.5 wt% white sugar plus 6.5 wt% BRER RABBIT brand Full Flavor Molasses |
| 900E | 93.5 wt% white sugar plus 6.5 wt% BRER RABBIT brand Blackstrap Molasses |

| | |
|---|---|
| Note - 6.5 wt% molasses was selected for Samples 900C-E as that is comparable to what one may use to make a dark brown sugar "from scratch." | |

Each of the samples were prepared by mixing the sugar with the fluid whole milk; for samples 900C-E, the white sugar and the molasses were mixed together before adding that sugar composition to the milk. A volume of each of the five samples was subjected to gas chromatography to estimate glyoxal, methylglyoxal, and diacetyl in the same manner as discussed above in connection with Miller 474. Again, the estimates for all three dicarbonyls was less than 2.5 ppm for each of samples 900A-900E, which was below the lower limit of the calibration curve for the GC. Thus, adding molasses or brown sugar as a "caramel-like flavor" in keeping with Miller 900 does not provide a useful source of these alpha-dicarbonyls.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. When the claims use the word "or" in reference to a list of two or more items, that word covers all of the following interpretations of the word: any of the items in the list, all of the items in the list, and any combination of the items in the list.

The above detailed descriptions of embodiments of the invention are not intended to be exhaustive or to limit the invention to the precise form disclosed above. Although specific embodiments of, and examples for, the invention are described above for illustrative purposes, various equivalent modifications are possible within the scope of the invention, as those skilled in the relevant art will recognize. For example, while steps are presented in a given order, alternative embodiments may perform steps in a different order. The various embodiments described herein can also be combined to provide further embodiments.

## Claims

1. A method for producing a crumb product, comprising:
combining milk solids, water, sugar, and an alpha-dicarbonyl component to form a wet combination; and
a) heating the wet combination to a temperature of about 60-100°C and drying the wet combination to a moisture content of less than 3%; or
b) heating the wet combination and cocoa solids under applied vacuum to produce a dry crumb having a moisture content of no more than 3%.

2. The method of claim 1 wherein the wet combination is dried to a moisture content of less than 2%.

3. The method of claim 1 or claim 2 wherein a weight of alpha-dicarbonyl from the alpha-dicarbonyl component is at least about 0.05% of the weight of the milk solids, both on a dry basis.

4. The method of any one of claims 1-3 wherein combining the milk solids, water, sugar, and the alpha-dicarbonyl component comprises combining sweetened condensed milk with the alpha-dicarbonyl component.

5. The method of any preceding claim wherein combining the milk solids, water, sugar, and the alpha-dicarbonyl component comprises combining the milk solids, at least a portion of the water, and an alpha-dicarbonyl-generating agent; and generating alpha-dicarbonyl from the milk solids with the agent.

6. The method of claim 5 wherein the alpha-dicarbonyl-generating agent comprises a lactic acid-producing bacterium and generating the alpha-dicarbonyl comprises incubating the bacterium in the presence of the milk solids.

7. The method of any preceding claim wherein the alpha-dicarbonyl component comprises a 2-carbon alpha-dicarbonyl, a 3-carbon alpha-dicarbonyl, or a combination thereof.

8. The method of any one of claims 1-7 wherein the wet combination is heated with the cocoa solids to a temperature of about 60-100°C under applied vacuum.

9. The method of any one of claims 1-7wherein drying the wet combination comprises maintaining a temperature of the wet combination at less than 100°C under applied vacuum.

10. The method of any one of claims 1-7 wherein heating the wet combination and cocoa solids under vacuum comprises heating the wet combination to a treatment temperature of less than 100°C; thereafter, mixing that heated wet combination with the cocoa solids; and heating the mixed wet combination and cocoa solids under the applied vacuum.

11. The method of any preceding claim wherein the alpha-dicarbonyl component comprises a 2-carbon alpha-dicarbonyl, a 3-carbon alpha-dicarbonyl, or a combination thereof.

12. The method of any preceding claim wherein the dry crumb has a noticeable increase in caramel and/or toffee flavor and/or aroma, as determined by a trained sensory panel, in comparison to a control crumb that is formed in the same manner but without the alpha-dicarbonyl component

13. A method for producing a crumb product, comprising combining milk solids, water, sugar, and an alpha-dicarbonyl component to form a sweetened milk composition; and heating the sweetened milk composition under applied vacuum to produce a dry crumb having a moisture content of no more than 3%, wherein the dry crumb has a noticeable increase in caramel and/or toffee flavor and/or aroma, as determined by a trained sensory panel, in comparison to a control crumb that is formed in the same manner but without the alpha-dicarbonyl component.

14. A crumb product produced by the method of any preceding claim.
